(19) Europäisches Patentamt / European Patent Office / Office européen des brevets

(11) **EP 2 670 594 B1**

## (12) FASCICULE DE BREVET EUROPEEN

(45) Date de publication et mention de la délivrance du brevet:
**20.05.2020 Bulletin 2020/21**

(21) Numéro de dépôt: **12707832.7**

(22) Date de dépôt: **31.01.2012**

(51) Int Cl.:
**B32B 17/10** (2006.01)      **B60J 3/00** (2006.01)
**G02B 27/01** (2006.01)      **G02B 5/02** (2006.01)

(86) Numéro de dépôt international:
**PCT/FR2012/050210**

(87) Numéro de publication internationale:
**WO 2012/104547 (09.08.2012 Gazette 2012/32)**

(54) **ELEMENT TRANSPARENT A REFLEXION DIFFUSE**

TRANSPARENTES ELEMENT MIT DIFFUSER REFLEKTION

TRANSPARENT ELEMENT WITH DIFFUSE REFLECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2011 FR 1150699**

(43) Date de publication de la demande:
**11.12.2013 Bulletin 2013/50**

(73) Titulaire: **Saint-Gobain Glass France**
**92400 Courbevoie (FR)**

(72) Inventeur: **SANDRE-CHARDONNAL, Etienne**
**F-75009 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2010/084132      DE-B- 1 130 199**
**US-A- 3 661 686      US-A1- 2003 161 997**
**US-A1- 2008 014 398**

**Description**

La présente invention a trait à un élément en couches transparent à propriétés de réflexion diffuse.

L'élément en couches peut être rigide ou flexible. Il peut s'agir en particulier d'un vitrage, constitué par exemple à base de verre ou de matériau polymère, susceptible d'être utilisé pour toutes applications connues de vitrages, telles que pour véhicules, bâtiments, mobilier urbain, ameublement intérieur, écrans d'affichage, etc. Il peut s'agir également d'un film flexible à base de matériau polymère, notamment apte à être rapporté sur une surface afin de lui conférer des propriétés de réflexion diffuse tout en préservant ses propriétés de transmission.

Les vitrages connus comprennent les vitrages transparents standards, qui donnent lieu à une transmission et une réflexion spéculaires d'un rayonnement incident sur le vitrage, et les vitrages translucides, qui donnent lieu à une transmission et une réflexion diffuses d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission égal à l'angle d'incidence.

Un inconvénient des vitrages transparents standards est qu'ils renvoient des reflets nets, à la manière de miroirs, ce qui n'est pas souhaitable dans certaines applications. Ainsi, lorsqu'un vitrage est utilisé pour une fenêtre de bâtiment ou un écran d'affichage, il est préférable de limiter la présence de reflets, qui réduisent la visibilité à travers le vitrage. Des reflets nets sur un vitrage peuvent également générer des risques d'éblouissement, avec des conséquences en termes de sécurité, par exemple lorsque des phares de véhicules se reflètent sur des façades vitrées de bâtiments. Ce problème se pose tout particulièrement pour les façades vitrées d'aéroports. Il est en effet essentiel de supprimer tout risque d'éblouissement des pilotes à l'approche des terminaux. Par ailleurs, les vitrages translucides, s'ils ont l'avantage de ne pas générer de reflets nets, ne permettent toutefois pas d'avoir une vision claire à travers le vitrage.

C'est à ces inconvénients qu'entend plus particulièrement remédier l'invention en proposant un élément en couches permettant à la fois d'avoir une vision nette à travers l'élément, de limiter les réflexions de type "miroir" sur l'élément, et de favoriser les réflexions diffuses sur l'élément.

Des éléments en couches sont connus de l'art antérieur US2003161997 A1 et US3661686 A.

L'invention est définie par les revendications.

A cet effet, l'invention a pour objet un élément en couches transparent ayant deux surfaces principales externes lisses, caractérisé en ce qu'il comprend :

- deux couches externes, qui forment chacune une des deux surfaces principales externes de l'élément en couches et qui sont constituées en des matériaux diélectriques ayant sensiblement le même indice de réfraction, et
- une couche centrale intercalée entre les couches externes, cette couche centrale étant formée soit par une couche unique qui est une couche diélectrique d'indice de réfraction différent de celui des couches externes ou une couche métallique, soit par un empilement de couches qui comprend au moins une couche diélectrique d'indice de réfraction différent de celui des couches externes ou une couche métallique,

où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique et l'autre métallique ou qui sont deux couches diélectriques d'indices de réfraction différents.

Dans le cadre de l'invention, on distingue les couches métalliques, d'une part, pour lesquelles la valeur de l'indice de réfraction est indifférente, et les couches diélectriques, d'autre part, pour lesquelles la différence d'indice de réfraction par rapport à celui des couches externes est à considérer. On entend par matériau ou couche diélectrique, un matériau ou une couche de conductivité électrique faible, inférieure à 100 S/m.

Chaque couche externe de l'élément en couches peut être formée par un empilement de couches, pour autant que les différentes couches constitutives de la couche externe soient constituées en des matériaux diélectriques ayant tous sensiblement le même indice de réfraction.

Au sens de l'invention, deux matériaux diélectriques ont sensiblement le même indice de réfraction, ou ont leurs indices de réfraction sensiblement égaux, lorsque la valeur absolue de la différence entre leurs indices de réfraction à 550 nm est inférieure ou égale à 0,15. De préférence, la valeur absolue de la différence d'indice de réfraction à 550 nm entre les matériaux constitutifs des deux couches externes de l'élément en couches est inférieure à 0,05, encore de préférence inférieure à 0,015.

Au sens de l'invention, deux couches diélectriques ont des indices de réfraction différents lorsque la valeur absolue de la différence entre leurs indices de réfraction à 550 nm est strictement supérieure à 0,15.

Au sens de l'invention, la surface de contact entre deux couches adjacentes est l'interface entre les deux couches adjacentes.

Dans le cadre de l'invention, on utilise les définitions suivantes :

- Un élément transparent est un élément à travers lequel il y a une transmission de rayonnement au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.
- Une surface lisse est une surface pour laquelle les irrégularités de surface sont de dimensions inférieures à la longueur d'onde du rayonnement incident sur la surface, de sorte que le rayonnement n'est pas dévié par ces irrégularités de surface. Le rayonnement incident est alors transmis et réfléchi de manière spéculaire par la surface.
- Une surface texturée est une surface pour laquelle les propriétés de surface varient à une échelle plus grande que la longueur d'onde du rayonnement incident sur la surface. Le rayonnement incident est alors transmis et réfléchi de manière diffuse par la surface.

Grâce à l'invention, on obtient une transmission spéculaire et une réflexion diffuse d'un rayonnement incident sur l'élément en couches. La transmission spéculaire garantit une vision nette à travers l'élément en couches. La réflexion diffuse permet d'éviter les reflets nets sur l'élément en couches et les risques d'éblouissement.

La réflexion diffuse sur l'élément en couches provient de ce que chaque surface de contact entre deux couches adjacentes qui sont l'une diélectrique et l'autre métallique, ou qui sont deux couches diélectriques d'indices de réfraction différents, est texturée. Ainsi, lorsqu'un rayonnement incident sur l'élément en couches atteint une telle surface de contact, il est réfléchi par la couche métallique ou du fait de la différence d'indice de réfraction entre les deux couches diélectriques et, comme la surface de contact est texturée, la réflexion est diffuse.

La transmission spéculaire provient de ce que les deux couches externes de l'élément en couches ont des surfaces principales externes lisses et sont constituées en des matériaux ayant sensiblement le même indice de réfraction, et de ce que chaque surface de contact texturée entre deux couches adjacentes de l'élément en couches qui sont l'une diélectrique et l'autre métallique, ou qui sont deux couches diélectriques d'indices de réfraction différents, est parallèle aux autres surfaces de contact texturées entre deux couches adjacentes qui sont l'une diélectrique et l'autre métallique ou qui sont deux couches diélectriques d'indices de réfraction différents.

Les surfaces externes lisses de l'élément en couches permettent une transmission spéculaire de rayonnement à chaque interface air/couche externe, c'est-à-dire permettent l'entrée d'un rayonnement depuis l'air dans une couche externe, ou la sortie d'un rayonnement depuis une couche externe dans l'air, sans modification de la direction du rayonnement.

Le parallélisme des surfaces de contact texturées implique que la ou chaque couche constitutive de la couche centrale qui est diélectrique d'indice de réfraction différent de celui des couches externes, ou qui est métallique, présente une épaisseur uniforme perpendiculairement aux surfaces de contact de la couche centrale avec les couches externes. Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

De manière avantageuse, afin d'obtenir le parallélisme des surfaces de contact texturées à l'intérieur de l'élément en couches, la ou chaque couche constitutive de la couche centrale est une couche déposée par pulvérisation cathodique. En effet, la pulvérisation cathodique, en particulier la pulvérisation cathodique assistée par un champ magnétique, garantit que les surfaces délimitant la couche sont parallèles entre elles, ce qui n'est pas le cas d'autres techniques de dépôt telles que l'évaporation ou le dépôt chimique en phase vapeur (CVD), ou encore le procédé sol-gel. Or, le parallélisme des surfaces de contact texturées à l'intérieur de l'élément en couches est essentiel pour obtenir une transmission spéculaire à travers l'élément.

Un rayonnement incident sur une première couche externe de l'élément en couches traverse cette première couche externe sans modification de sa direction. Du fait de la différence de nature, diélectrique ou métallique, ou de la différence d'indice de réfraction entre la première couche externe et au moins une couche de la couche centrale, le rayonnement est ensuite réfracté dans la couche centrale. Comme, d'une part, les surfaces de contact texturées entre deux couches adjacentes de l'élément en couches qui sont l'une diélectrique et l'autre métallique, ou qui sont deux couches diélectriques d'indices de réfraction différents, sont toutes parallèles entre elles et, d'autre part, la deuxième couche externe a sensiblement le même indice de réfraction que la première couche externe, l'angle de réfraction du rayonnement dans la deuxième couche externe à partir de la couche centrale est égal à l'angle d'incidence du rayonnement sur la couche centrale à partir de la première couche externe, conformément à la loi de Snell-Descartes pour la réfraction.

Le rayonnement ressort donc de la deuxième couche externe de l'élément en couches selon une direction qui est la même que sa direction d'incidence sur la première couche externe de l'élément. La transmission du rayonnement par l'élément en couches est ainsi spéculaire.

Selon un aspect de l'invention, on tire parti des propriétés de réflexion diffuse de l'élément en couches pour réfléchir une grande partie du rayonnement, dans une pluralité de directions, du côté d'incidence du rayonnement. Cette forte réflexion diffuse est obtenue tout en ayant une vision claire à travers l'élément en couches, c'est-à-dire sans que l'élément en couches soit translucide, grâce aux propriétés de transmission spéculaire de l'élément en couches. Un tel élément en couches transparent à forte réflexion diffuse trouve application, par exemple, pour des écrans d'affichage ou de projection.

En particulier, un tel élément en couches à forte réflexion diffuse peut être utilisé dans un système de visualisation dit tête haute, ou "Head Up Display" (HUD). De manière connue, les systèmes HUD, qui sont utiles notamment dans les cockpits d'avion, les trains, mais aussi aujourd'hui dans les véhicules automobiles des particuliers (voitures, camions, etc.), permettent d'afficher des informations projetées sur un vitrage, en général le pare-brise du véhicule, qui se réfléchissent vers le conducteur ou l'observateur. Ces systèmes permettent d'informer le conducteur du véhicule sans que celui-ci éloigne son regard du champ de vision en avant du véhicule, ce qui permet d'accroître grandement la sécurité. Le conducteur perçoit une image virtuelle qui se situe à une certaine distance derrière le vitrage.

Selon un aspect de l'invention, l'élément en couches est intégré dans un système HUD en tant que vitrage, sur lequel sont projetées les informations. Selon un autre aspect de l'invention, l'élément en couches est un film flexible rapporté sur une surface principale d'un vitrage d'un système HUD, notamment un pare-brise, les informations étant projetées sur le vitrage du côté du film flexible. Dans ces deux cas, il s'opère une forte réflexion diffuse sur la première surface de contact texturée rencontrée par le rayonnement dans l'élément en couches, ce qui permet une bonne visualisation de l'image virtuelle, tandis que la transmission spéculaire à travers le vitrage est préservée, ce qui garantit une vision nette à travers le vitrage.

On note que, dans les systèmes HUD de l'état de la technique, l'image virtuelle est obtenue en projetant les informations sur un vitrage (notamment un pare-brise) ayant une structure feuilletée formée de deux feuilles de verre et d'un intercalaire en matière plastique. Un inconvénient de ces systèmes existants est que le conducteur observe alors une image double : une première image réfléchie par la surface du vitrage orientée vers l'intérieur de l'habitable et une seconde image par réflexion de la surface extérieure du vitrage, ces deux images étant légèrement décalées l'une par rapport à l'autre. Ce décalage peut perturber la vision de l'information.

L'invention permet de remédier à ce problème. En effet, lorsque l'élément en couches est intégré dans un système HUD, en tant que vitrage ou en tant que film flexible rapporté sur la surface principale du vitrage qui reçoit le rayonnement de la source de projection, la réflexion diffuse sur la première surface de contact texturée rencontrée par le rayonnement dans l'élément en couches peut être nettement plus élevée que la réflexion sur les surfaces externes en contact avec l'air. Ainsi, on limite la double réflexion en favorisant la réflexion sur la première surface de contact texturée de l'élément en couches.

Selon une caractéristique avantageuse, la valeur absolue de la différence d'indice de réfraction à 550 nm entre, d'une part, les couches externes et, d'autre part, au moins une couche diélectrique de la couche centrale, est supérieure ou égale à 0,3, de préférence supérieure ou égale à 0,5, encore de préférence supérieure ou égale à 0,8. Cette différence d'indice de réfraction relativement importante intervient au niveau d'au moins une surface de contact texturée interne à l'élément en couches. Cela permet de favoriser la réflexion de rayonnement sur cette surface de contact texturée, c'est-à-dire une réflexion diffuse du rayonnement par l'élément en couches.

Selon un aspect de l'invention, au moins l'une des deux couches externes de l'élément en couches est un substrat transparent dont l'une des surfaces principales est texturée et l'autre surface principale est lisse.

Le substrat transparent peut être constitué, notamment, en polymère transparent, verre transparent, céramique transparente. Lorsque le substrat transparent est constitué en polymère, il peut être rigide ou flexible.

La texturation de l'une des surfaces principales du substrat transparent peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat ; par abrasion au moyen de particules ou de surfaces abrasives, en particulier par sablage ; par traitement chimique, notamment traitement à l'acide dans le cas d'un substrat en verre ; par moulage, notamment moulage par injection dans le cas d'un substrat en polymère thermoplastique ; par gravure.

Des exemples de polymères appropriés pour le substrat transparent comprennent, notamment, les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; le polycarbonate ; le polyuréthane ; les polyamides ;

les polyimides ; les polymères fluorés tels que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ; les résines photoréticulables et/ou photopolymérisables, telles que les résines thiolène, polyuréthane, uréthane-acrylate, polyester-acrylate.

Des exemples de substrats en verre, déjà texturés et directement utilisables en tant que couche externe de l'élément en couches, comprennent les substrats en verre commercialisés par la société Saint-Gobain Glass dans la gamme SATINOVO®, qui présentent sur l'une de leurs surfaces principales une texture obtenue par sablage ou attaque acide ; les substrats en verre commercialisés par la société Saint-Gobain Glass dans la gamme ALBARINO® S, P ou G ou dans la gamme MASTERGLASS®, qui présentent sur l'une de leurs surfaces principales une texture obtenue par laminage.

Lorsque chacune des deux couches externes de l'élément en couches est formée par un substrat transparent dont l'une des surfaces principales est texturée et l'autre surface principale est lisse, les deux substrats transparents ont des textures complémentaires l'une par rapport à l'autre.

Dans un mode de réalisation, la couche centrale de l'élément en couches est formée par une couche de matériau diélectrique d'indice de réfraction différent de celui des couches externes, les couches externes étant assemblées entre elles au moyen de la couche centrale.

Dans un autre mode de réalisation, la couche centrale de l'élément en couches comprend au moins une couche mince constituée en un matériau diélectrique à haut indice de réfraction, différent de l'indice de réfraction des couches externes, tel que $Si_3N_4$, $SnO_2$, ZnO, AlN, NbO, NbN, $TiO_2$, ou constituée en un matériau diélectrique à bas indice de réfraction, différent de l'indice de réfraction des couches externes, tel que $SiO_2$, $Al_2O_3$, $MgF_2$, $AlF_3$. La couche centrale de l'élément en couches peut également comprendre au moins une couche mince métallique, notamment une couche mince d'argent, d'or, de titane, de niobium, de silicium, d'aluminium, d'alliage nickel-chrome (NiCr), d'acier inoxydable, ou de leurs alliages. Au sens de l'invention, une couche mince est une couche d'épaisseur inférieure à 1 micromètre.

De manière avantageuse, la composition de la couche centrale de l'élément en couches peut être ajustée pour conférer des propriétés supplémentaires à l'élément en couches, par exemple des propriétés thermiques, de type contrôle solaire et/ou basse émissivité. Ainsi, dans un mode de réalisation, la couche centrale de l'élément en couches est un empilement transparent de couches minces comprenant une alternance de « *n* » couches fonctionnelles métalliques, notamment de couches fonctionnelles à base d'argent ou d'alliage métallique contenant de l'argent, et de « (*n* + 1) » revêtements antireflet, avec $n \geq 1$, où chaque couche fonctionnelle métallique est disposée entre deux revêtements antireflet.

De manière connue, un tel empilement à couche fonctionnelle métallique présente des propriétés de réflexion dans le domaine du rayonnement solaire et/ou dans le domaine du rayonnement infrarouge de grande longueur d'onde. Dans un tel empilement, la ou les couches fonctionnelles métalliques déterminent essentiellement les performances thermiques, tandis que les revêtements antireflet qui les encadrent agissent sur l'aspect optique de manière interférentielle. En effet, si les couches fonctionnelles métalliques permettent d'obtenir des performances thermiques souhaitées même à une faible épaisseur géométrique, de l'ordre de 10 nm pour chaque couche fonctionnelle métallique, elles s'opposent toutefois fortement au passage de rayonnement dans le domaine de longueurs d'onde du visible. Dès lors, des revêtements antireflet de part et d'autre de chaque couche fonctionnelle métallique sont nécessaires pour assurer une bonne transmission lumineuse dans le domaine du visible. En pratique, c'est l'empilement global de la couche centrale, comprenant les couches minces métalliques et les revêtements antireflet, qui est optimisé optiquement. De manière avantageuse, l'optimisation optique peut être faite sur l'empilement global de l'élément en couches, c'est-à-dire incluant les couches externes positionnées de part et d'autre de la couche centrale.

L'élément en couches obtenu combine alors des propriétés optiques, à savoir des propriétés de transmission spéculaire et de réflexion diffuse d'un rayonnement incident sur l'élément en couches, et des propriétés thermiques, à savoir des propriétés de contrôle solaire et/ou de basse émissivité. Un tel élément en couches peut être utilisé pour des vitrages de protection solaire et/ou d'isolation thermique de bâtiments ou véhicules.

Selon un aspect de l'invention, la texture de chaque surface de contact entre deux couches adjacentes de l'élément en couches qui sont l'une diélectrique et l'autre métallique, ou qui sont deux couches diélectriques d'indices de réfraction différents, est formée par une pluralité de motifs en creux ou en saillie par rapport à un plan général de la surface de contact. De préférence, la hauteur moyenne des motifs de chaque surface de contact entre deux couches adjacentes de l'élément en couches qui sont l'une diélectrique et l'autre métallique, ou qui sont deux couches diélectriques d'indices de réfraction différents, est comprise entre 1 micromètre et 1 millimètre. Au sens de l'invention, la hauteur moyenne des motifs de la surface de contact est définie comme la moyenne arithmétique des distances $y_i$ en valeur absolue prises entre le sommet et le plan général de la surface de contact pour chaque motif de la surface de contact,

égale à $\dfrac{1}{n}\sum_{i=1}^{n}|y_i|$.

Les motifs de la texture de chaque surface de contact entre deux couches adjacentes de l'élément en couches qui sont l'une diélectrique et l'autre métallique, ou qui sont deux couches diélectriques d'indices de réfraction différents, peuvent être répartis de manière aléatoire sur la surface de contact. En variante, les motifs de la texture de chaque surface de contact entre deux couches adjacentes de l'élément en couches qui sont l'une diélectrique et l'autre métallique, ou qui sont deux couches diélectriques d'indices de réfraction différents, peuvent être répartis de manière périodique sur la surface de contact. Ces motifs peuvent être, notamment, des cônes, des pyramides, des rainures, des nervures, des vaguelettes.

Selon un aspect de l'invention, pour chaque couche de la couche centrale qui est encadrée par des couches de nature, diélectrique ou métallique, différente de la sienne ou d'indices de réfraction différents du sien, l'épaisseur de cette couche, prise perpendiculairement à ses surfaces de contact avec les couches adjacentes, est faible par rapport à la hauteur moyenne des motifs de chacune des ses surfaces de contact avec les couches adjacentes. Une telle épaisseur faible permet d'augmenter la probabilité que l'interface d'entrée d'un rayonnement dans cette couche et l'interface de sortie du rayonnement hors de cette couche soient parallèles, et donc d'augmenter le pourcentage de transmission spéculaire du rayonnement à travers l'élément en couches. De manière avantageuse, l'épaisseur de chaque couche de la couche centrale qui est intercalée entre deux couches de nature, diélectrique ou métallique, différente de la sienne ou d'indices de réfraction différents du sien, où cette épaisseur est prise perpendiculairement à ses surfaces de contact avec les couches adjacentes, est inférieure à 1/4 de la hauteur moyenne des motifs de chacune de ses surfaces de contact avec les couches adjacentes.

De manière avantageuse, l'élément en couches comprend, sur au moins l'une de ses surfaces principales externes lisses, un revêtement antireflet à l'interface entre l'air et le matériau constitutif de la couche externe formant cette surface principale externe. Grâce à la présence de ce revêtement antireflet, un rayonnement incident sur l'élément en couches du côté de cette surface principale externe est réfléchi de manière privilégiée à chaque surface de contact texturée plutôt que sur la surface externe lisse de l'élément en couches, ce qui correspond à un mode de réflexion diffuse plutôt qu'à un mode de réflexion spéculaire. Une réflexion diffuse du rayonnement par l'élément en couches est ainsi favorisée par rapport à une réflexion spéculaire.

Le revêtement antireflet prévu sur au moins l'une des surfaces principales externes de l'élément en couches peut être de tout type permettant de réduire la réflexion de rayonnement à l'interface entre l'air et la couche externe correspondante de l'élément en couches. Il peut s'agir, notamment, d'une couche d'indice de réfraction compris entre l'indice de réfraction de l'air et l'indice de réfraction de la couche externe, telle qu'une couche déposée sur la surface de la couche externe par une technique sous vide ou une couche poreuse de type sol-gel, ou encore, dans le cas où la couche externe est en verre, une partie superficielle creusée de la couche externe en verre obtenue par un traitement à l'acide de type "etching". En variante, le revêtement antireflet peut être formé par un empilement de couches minces ayant des indices de réfraction alternativement plus faibles et plus forts jouant le rôle d'un filtre interférentiel à l'interface entre l'air et la couche externe, ou par un empilement de couches minces présentant un gradient, continu ou échelonné, d'indices de réfraction entre l'indice de réfraction de l'air et celui de la couche externe.

De manière avantageuse, les surfaces principales externes lisses de l'élément en couches sont parallèles entre elles. Cela contribue à limiter la dispersion lumineuse pour un rayonnement traversant l'élément en couches, et donc à améliorer la netteté de la vision à travers l'élément en couches.

Dans un mode de réalisation de l'invention, une première couche externe parmi les deux couches externes de l'élément en couches est un substrat transparent dont l'une des surfaces principales est texturée et l'autre surface principale est lisse, et la couche centrale est formée soit par une couche unique, qui est une couche diélectrique d'indice de réfraction différent de celui de la première couche externe ou une couche métallique, déposée de manière conforme sur la surface principale texturée de la première couche externe, soit par un empilement de couches, qui comprend au moins une couche diélectrique d'indice de réfraction différent de celui de la première couche externe ou une couche métallique, déposées successivement de manière conforme sur la surface principale texturée de la première couche externe.

La deuxième couche externe peut alors être comprendre une couche de matériau durcissable d'indice de réfraction sensiblement égal à celui de la première couche externe, déposée sur la surface principale texturée de la couche centrale opposée à la première couche externe en étant initialement dans un état visqueux adapté à des opérations de mise en forme.

Selon un aspect de l'invention, la deuxième couche externe est constituée par la couche déposée initialement dans un état visqueux, en particulier une couche de type vernis, qui assure alors une planarisation de la surface de l'élément en couches.

Selon un autre aspect de l'invention, la deuxième couche externe comprend la couche déposée initialement dans un état visqueux et un contre-substrat, la couche déposée initialement dans un état visqueux assurant alors une solidarisation entre la première couche externe munie de la couche centrale et le contre-substrat.

La couche déposée initialement dans un état visqueux peut être une couche de matériau photoréticulable et/ou photopolymérisable. De préférence, ce matériau photoréticulable et/ou photopolymérisable se présente sous forme liquide à la température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/ comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide. Des exemples de résines photoréticulables et/ou photopolymérisables utilisables dans la présente invention comprennent les produits commercialisés par la société Norland Optics sous la marque NOA® Norland Optical Adhesives, comme par exemple les produits NOA65 et NOA75.

En variante, la deuxième couche externe déposée initialement dans un état visqueux peut être une couche déposée par un procédé sol-gel, par exemple un verre de silice déposé par sol-gel. De manière connue, les précurseurs pour le dépôt sol-gel d'un verre de silice sont des alcoxydes de silicium $Si(OR)_4$, qui donnent lieu en présence d'eau à des réactions de polymérisation de type hydrolyse-condensation. Ces réactions de polymérisation entraînent la formation d'espèces de plus en plus condensées, qui conduisent à des particules de silice colloïdale formant des sols puis des gels. Le séchage et la densification de ces gels de silice, à une température de l'ordre de quelques centaines de degrés, conduit à un verre dont les caractéristiques sont semblables à celles d'un verre classique. Du fait de leur viscosité, la solution colloïdale ou le gel peuvent être déposés de manière aisée sur la surface principale texturée de la couche centrale opposée à la première couche externe, en se conformant à la texture de cette surface. Ce dépôt peut notamment être réalisé par dip-coating, spin-coating ou blading.

Selon un aspect de l'invention, la deuxième couche externe peut comprendre une couche à base de matériau polymère d'indice de réfraction sensiblement égal à celui de la première couche externe, positionnée contre la surface principale texturée de la couche centrale opposée à la première couche externe et mise en forme contre cette surface texturée par compression et/ou chauffage.

Cette couche à base de matériau polymère peut être, en particulier, une couche à base de polybutyral de vinyle (PVB), d'éthylène vinylacétate (EVA), de polyuréthane (PU), de polyéthylène téréphtalate (PET), de polychlorure de vinyle (PVC). Cette couche à base de matériau polymère peut jouer le rôle d'un intercalaire de feuilletage assurant une liaison avec un substrat transparent d'indice de réfraction sensiblement égal à celui de la première couche externe appartenant également à la deuxième couche externe.

L'élément en couches peut être un vitrage rigide. En variante, il peut s'agir d'un film flexible. Un tel film flexible est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un vitrage, afin de conférer à cette surface des propriétés de réflexion diffuse, tout en maintenant des propriétés de transmission spéculaire.

Un autre objet de l'invention est un procédé de fabrication d'un élément en couches tel que décrit précédemment, comprenant des étapes dans lesquelles :

- on fournit, en tant que couches externes, deux substrats transparents constitués en des matériaux diélectriques ayant sensiblement le même indice de réfraction, où chaque substrat transparent a l'une de ses surfaces principales qui est texturée et son autre surface principale qui est lisse, les textures des deux substrats transparents étant complémentaires l'une de l'autre ;
- on prend en sandwich une couche centrale, comprenant au moins une couche diélectrique d'indice de réfraction différent de celui des couches externes ou une couche métallique, entre les surfaces principales texturées des deux substrats transparents qui sont positionnées en regard l'une de l'autre de telle sorte que leurs textures sont parallèles l'une à l'autre.

Un autre procédé de fabrication d'un élément en couches tel que décrit précédemment comprend des étapes dans lesquelles :

- on fournit, en tant que première couche externe, un substrat transparent dont l'une des surfaces principales est texturée et l'autre surface principale est lisse ;
- on dépose une couche centrale sur la surface principale texturée de la première couche externe, soit, lorsque la couche centrale est formée par une couche unique, qui est une couche diélectrique d'indice de réfraction différent de celui de la première couche externe ou une couche métallique, en déposant la couche centrale de manière conforme sur ladite surface principale texturée, soit, lorsque la couche centrale est formée par un empilement de couches comprenant au moins une couche diélectrique d'indice de réfraction différent de celui de la première couche externe ou une couche métallique, en déposant les couches de la couche centrale successivement de manière conforme sur ladite surface principale texturée ;
- on forme la deuxième couche externe sur la surface principale texturée de la couche centrale opposée à la première couche externe, où la première couche externe et la deuxième couche externe sont constituées en des matériaux diélectriques ayant sensiblement le même indice de réfraction.

Selon une caractéristique avantageuse, le dépôt de la couche centrale de manière conforme, ou des couches de la couche centrale successivement de manière conforme, sur la surface principale texturée de la première couche externe est réalisé par pulvérisation cathodique, notamment assistée par un champ magnétique.

Selon un aspect de l'invention, la deuxième couche externe est formée en déposant, sur la surface principale texturée de la couche centrale opposée à la première couche externe, une couche qui a sensiblement le même indice de réfraction que la première couche externe et qui se présente initialement dans un état visqueux adapté à des opérations de mise en forme. La deuxième couche externe peut ainsi être formée, par exemple, par un procédé comprenant le dépôt d'une couche de matériau photoréticulable et/ou photopolymérisable initialement sous forme fluide puis l'irradiation de cette couche, ou par un procédé sol-gel.

Selon un autre aspect de l'invention, la deuxième couche externe est formée en positionnant, contre la surface principale texturée de la couche centrale opposée à la première couche externe, une couche à base de matériau polymère ayant sensiblement le même indice de réfraction que la première couche externe, puis en conformant cette couche à base de matériau polymère contre la surface principale texturée de la couche centrale par compression et/ou chauffage au moins à la température de transition vitreuse du matériau polymère.

L'invention a également pour objet une façade de bâtiment, notamment une façade de terminal d'aéroport, comprenant au moins un élément en couches tel que décrit précédemment.

Un autre objet de l'invention est un écran d'affichage ou de projection comprenant un élément en couches tel que décrit précédemment. En particulier, un objet de l'invention est un vitrage de système Head Up Display comprenant un élément en couches tel que décrit précédemment.

Enfin, l'invention a pour objet l'utilisation d'un élément en couches tel que décrit précédemment comme tout ou partie d'un vitrage pour véhicule, bâtiment, mobilier urbain, ameublement intérieur, écran d'affichage ou de projection, système Head Up Display.

Les caractéristiques et avantages de l'invention apparaîtront dans la description qui va suivre de plusieurs modes de réalisation d'un élément en couches, donnée uniquement à titre d'exemple et faite en se référant aux dessins annexés dans lesquels :

- la figure 1 est une coupe transversale schématique d'un élément en couches conforme à un mode de réalisation de l'invention ;
- la figure 2 est une vue à plus grande échelle du détail I de la figure 1 pour une première variante de l'élément en couches ;
- la figure 3 est une vue à plus grande échelle du détail I de la figure 1 pour une deuxième variante de l'élément en couches ;
- la figure 4 est un schéma montrant des étapes d'un premier procédé de fabrication de l'élément en couches de la figure 1 ;
- la figure 5 est un schéma montrant des étapes d'un deuxième procédé de fabrication de l'élément en couches de la figure 1 ;
- la figure 6 est un schéma montrant des étapes d'un troisième procédé de fabrication de l'élément en couches de la figure 1 ; et
- la figure 7 est un schéma montrant des étapes d'un quatrième procédé de fabrication de l'élément en couches de la figure 1.

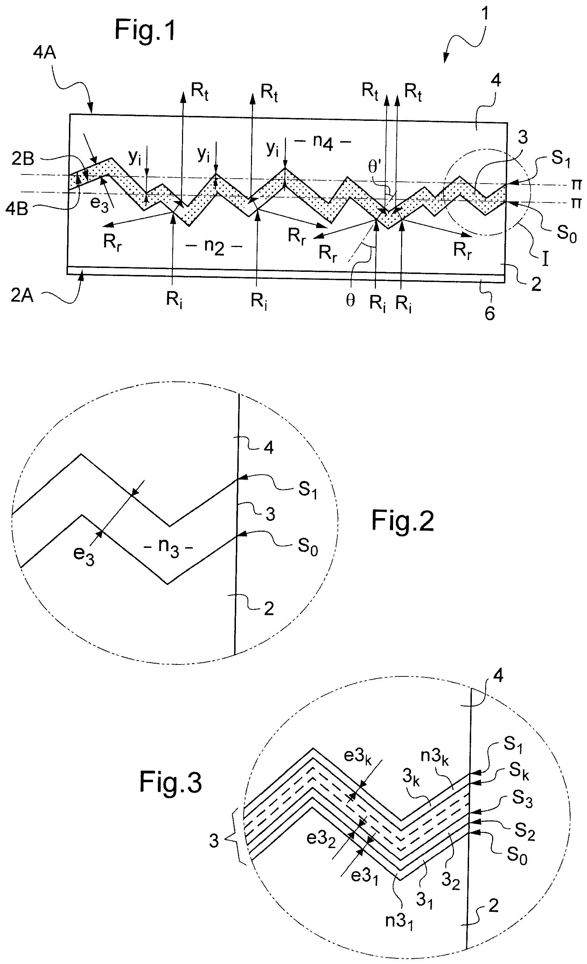

Pour la clarté du dessin, les épaisseurs relatives des différentes couches sur les figures 1 à 7 n'ont pas été rigoureusement respectées. De plus, la possible variation d'épaisseur de la ou chaque couche constitutive de la couche centrale en fonction de la pente de la texture n'a pas été représentée sur les figures, étant entendu que cette possible variation d'épaisseur n'impacte pas le parallélisme des surfaces de contact texturées. En effet, pour chaque pente donnée de la texture, les surfaces de contact texturées sont parallèles entre elles.

L'élément en couches 1 représenté sur la figure 1 comprend deux couches externes 2 et 4, qui sont constituées en des matériaux diélectriques transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les surfaces externes lisses 2A et 4A de l'élément en couches 1 permettent une transmission spéculaire de rayonnement à chaque surface 2A et 4A, c'est-à-dire l'entrée d'un rayonnement dans une couche externe ou la sortie d'un rayonnement depuis une couche externe sans modification de la direction du rayonnement.

Les textures des surfaces internes 2B et 4B sont complémentaires l'une de l'autre. Comme bien visible sur la figure 1, les surfaces texturées 2B et 4B sont positionnées en regard l'une de l'autre, dans une configuration où leurs textures sont strictement parallèles entre elles. L'élément en couches 1 comprend également une couche centrale 3, intercalée en contact entre les surfaces texturées 2B et 4B.

Dans la variante montrée sur la figure 2, la couche centrale 3 est monocouche et constituée en un matériau transparent qui est soit métallique, soit diélectrique d'indice de réfraction n3 différent de celui des couches externes 2 et 4. Dans la variante montrée sur la figure 3, la couche centrale 3 est formée par un empilement transparent de plusieurs couches $3_1, 3_2, ..., 3_k$, où au moins l'une des couches $3_1$ à $3_k$ est soit une couche métallique, soit une couche diélectrique d'indice de réfraction différent de celui des couches externes 2 et 4. De préférence, au moins chacune des deux couches $3_1$ et $3_k$ situées aux extrémités de l'empilement est une couche métallique ou une couche diélectrique d'indice de réfraction $n3_1$ ou $n3_k$ différents de celui des couches externes 2 et 4.

Sur les figures 1 à 3, on note $S_0$ la surface de contact entre la couche externe 2 et la couche centrale 3, et $S_1$ la surface de contact entre la couche centrale 3 et la couche externe 4. De plus, sur la figure 3, on note successivement $S_2$ à $S_k$ les surfaces de contact internes de la couche centrale 3, en partant de la surface de contact la plus proche de la surface $S_0$.

Dans la variante de la figure 2, du fait de l'agencement de la couche centrale 3 en contact entre les surfaces texturées 2B et 4B qui sont parallèles entre elles, la surface de contact $S_0$ entre la couche externe 2 et la couche centrale 3 est texturée et parallèle à la surface de contact $S_1$ entre la couche centrale 3 et la couche externe 4. En d'autres termes, la couche centrale 3 est une couche texturée présentant, au moins localement, une épaisseur e3 uniforme, prise perpendiculairement aux surfaces de contact $S_0$ et $S_1$.

Dans la variante de la figure 3, chaque surface de contact $S_2, ..., S_k$ entre deux couches adjacentes de l'empilement constitutif de la couche centrale 3 est texturée et strictement parallèle aux surfaces de contact $S_0$ et $S_1$ entre les couches externes 2, 4 et la couche centrale 3. Ainsi, toutes les surfaces de contact $S_0, S_1, ..., S_k$ entre des couches adjacentes de l'élément 1 qui sont soit de natures différentes, diélectrique ou métallique, soit diélectriques d'indices de réfraction différents, sont texturées et parallèles entre elles. En particulier, chaque couche $3_1, 3_2, ..., 3_k$ de l'empilement constitutif de la couche centrale 3 présente, au moins localement, une épaisseur $e3_1, e3_2, ..., e3_k$ uniforme, prise perpendiculairement aux surfaces de contact $S_0, S_1, ..., S_k$.

Comme montré sur la figure 1, la texture de chaque surface de contact $S_0, S_1$ ou $S_0, S_1, ..., S_k$ de l'élément en couches 1 est formée par une pluralité de motifs en creux ou en saillie par rapport à un plan général $\pi$ de la surface de contact. De préférence, la hauteur moyenne des motifs de chaque surface de contact texturée $S_0, S_1$ ou $S_0, S_1, ..., S_k$ est comprise entre 1 micromètre et 1 millimètre. La hauteur moyenne des motifs de chaque surface de contact texturée est définie comme la moyenne arithmétique $\dfrac{1}{n}\sum_{i=1}^{n}|y_i|$, avec $y_i$ la distance prise entre le sommet et le plan $\pi$ pour chaque motif de la surface, comme montré schématiquement sur la figure 1.

Selon un aspect de l'invention, l'épaisseur e3 ou $e3_1, e3_2, ..., e3_k$ de la ou chaque couche constitutive de la couche centrale 3 est inférieure à la hauteur moyenne des motifs de chaque surface de contact texturée $S_0, S_1$ ou $S_0, S_1, ..., S_k$ de l'élément en couches 1. Cette condition est importante pour augmenter la probabilité que l'interface d'entrée d'un rayonnement dans une couche de la couche centrale 3 et l'interface de sortie du rayonnement hors de cette couche soient parallèles, et ainsi augmenter le pourcentage de transmission spéculaire du rayonnement à travers l'élément en couches 1. Dans un souci de visibilité des différentes couches, cette condition n'a pas été strictement respectée sur les figures 1 à 7.

De préférence, l'épaisseur e3 ou $e3_1, e3_2, ..., e3_k$ de la ou chaque couche constitutive de la couche centrale 3 est inférieure à 1/4 de la hauteur moyenne des motifs de chaque surface de contact texturée de l'élément en couches. En pratique, lorsque la couche centrale 3 est une couche mince ou un empilement de couches minces, l'épaisseur e3 ou $e3_1, e3_2, ..., e3_k$ de chaque couche de la couche centrale 3 est de l'ordre de, ou inférieure à, 1/10 de la hauteur moyenne des motifs de chaque surface de contact texturée de l'élément en couches.

La figure 1 illustre le parcours d'un rayonnement, qui est incident sur l'élément en couches 1 du côté de la couche externe 2. Les rayons incidents $R_i$ arrivent sur la couche externe 2 avec un angle d'incidence $\theta$ donné. Comme montré sur la figure 1, les rayons incidents $R_i$, lorsqu'ils atteignent la surface de contact $S_0$ entre la couche externe 2 et la couche centrale 3, sont réfléchis soit par la surface métallique, soit du fait de la différence d'indice de réfraction à cette surface de contact respectivement entre la couche externe 2 et la couche centrale 3 dans la variante de la figure 2 et entre la couche externe 2 et la couche $3_1$ dans la variante de la figure 3. Comme la surface de contact $S_0$ est texturée, la réflexion s'opère dans une pluralité de directions $R_r$. La réflexion du rayonnement par l'élément en couches 1 est donc diffuse.

Une partie du rayonnement incident est également réfractée dans la couche centrale 3. Dans la variante de la figure 2, les surfaces de contact $S_0$ et $S_1$ sont parallèles entre elles, ce qui implique d'après la loi de Snell-Descartes que $n2.\sin(\theta) = n4.\sin(\theta')$, où $\theta$ est l'angle d'incidence du rayonnement sur la couche centrale 3 à partir de la couche externe 2 et $\theta'$ est l'angle de réfraction du rayonnement dans la couche externe 4 à partir de la couche centrale 3. Dans la variante de la figure 3, comme les surfaces de contact $S_0, S_1, ..., S_k$ sont toutes parallèles entre elles, la relation $n2.\sin(\theta)$ = $n4.\sin(\theta')$ issue de la loi de Snell-Descartes reste vérifiée. Dès lors, dans les deux variantes, comme les indices de réfraction n2 et n4 des deux couches externes sont sensiblement égaux l'un à l'autre, les rayons $R_t$ transmis par l'élément en couches sont transmis avec un angle de transmission $\theta'$ égal à leur angle d'incidence $\theta$ sur l'élément en couches. La transmission du rayonnement par l'élément en couches 1 est donc spéculaire.

De manière analogue, dans les deux variantes, un rayonnement incident sur l'élément couches 1 du côté de la couche externe 4 est réfléchi de manière diffuse et transmis de manière spéculaire par l'élément en couches, pour les mêmes raisons que précédemment.

De manière avantageuse, l'élément en couches 1 comprend un revêtement antireflet 6 sur au moins l'une de ses surfaces externes lisses 2A et 4A. De préférence, un revêtement antireflet 6 est prévu sur chaque surface principale externe de l'élément en couches qui est destinée à recevoir un rayonnement. Dans l'exemple de la figure 1, seule la surface 2A de la couche externe 2 est munie d'un revêtement antireflet 6, car il s'agit de la surface de l'élément en couches qui est dirigée du côté d'incidence du rayonnement.

Comme évoqué précédemment, le revêtement antireflet 6, prévu sur la surface lisse 2A et/ou 4A de la couche externe 2 ou 4, peut être de tout type permettant de réduire la réflexion de rayonnement à l'interface entre l'air et la couche externe. Il peut s'agir notamment d'une couche d'indice de réfraction compris entre l'indice de réfraction de l'air et l'indice de réfraction de la couche externe, d'un empilement de couches minces jouant le rôle d'un filtre interférentiel, ou encore d'un empilement de couches minces présentant un gradient d'indices de réfraction.

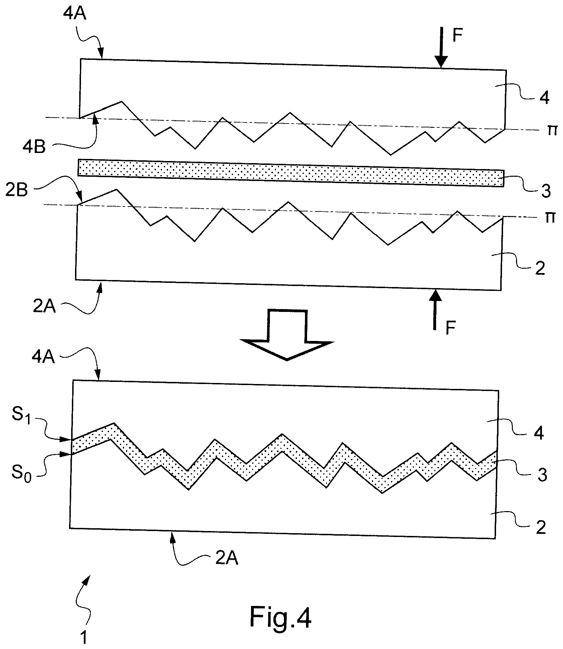

Des exemples de procédés de fabrication de l'élément en couches 1 sont décrits ci-après, en référence aux figures 4 à 7.

Dans le cas illustré sur la figure 4, les couches externes 2 et 4 de l'élément en couches 1 sont formées par deux substrats transparents rigides ayant sensiblement le même indice de réfraction. Chaque substrat 2 ou 4 présente une surface principale lisse 2A ou 4A et une surface principale texturée 2B ou 4B. Les textures des substrats 2 et 4 sont complémentaires l'une de l'autre, de telle sorte que les substrats sont aptes à être emboîtés l'un dans l'autre de manière jointive par mise en prise de leurs textures.

Les substrats 2 et 4 peuvent être, notamment, deux substrats identiques en verre texturé de type SATINOVO®, ALBARINO® ou MASTERGLASS®. En variante, au moins l'un parmi les deux substrats 2 et 4 peut être un substrat rigide à base de matériau polymère, par exemple de type polyméthacrylate de méthyle ou polycarbonate.

La couche centrale 3 est formée par une couche adhésive en polymère transparent ayant un indice de réfraction différent de celui des substrats 2 et 4. La fabrication de l'élément en couches met en jeu, comme montré schématiquement sur la figure 4, la prise en sandwich de la couche centrale 3 entre les surfaces texturées 2B et 4B des substrats 2 et 4, ces surfaces 2B et 4B ayant été préalablement positionnées en regard l'une de l'autre dans une configuration où leurs textures sont strictement parallèles entre elles.

Le positionnement relatif des surfaces texturées 2B et 4B avec leurs textures parallèles entre elles peut être obtenu, notamment, en partant d'une configuration emboîtée des substrats 2 et 4 avec leurs textures en prise jointive l'une dans l'autre, et en écartant l'un des substrats par rapport à l'autre substrat par un mouvement de translation selon un axe perpendiculaire à un plan moyen du substrat.

A titre d'exemple, lorsque les substrats 2 et 4 sont en verre, la couche centrale 3 peut être une couche de colle d'indice de réfraction éloigné de celui du verre. Cette colle peut se présenter initialement dans un état pâteux. Le procédé de fabrication de l'élément en couches 1 peut alors comprendre une étape dans laquelle on applique, sur la surface texturée de l'un des deux substrats 2 ou 4, une épaisseur de cette colle à l'état pâteux, puis une étape dans laquelle on presse l'épaisseur de colle entre les surfaces texturées 2B et 4B positionnées avec leurs textures parallèles entre elles.

La compression de l'épaisseur de colle entre les surfaces texturées 2B et 4B est réalisée par un déplacement relatif des substrats 2 et 4 en direction l'un de l'autre, comme montré par les flèches F de la figure 4, de telle sorte que la colle remplit les creux des surfaces texturées 2B et 4B. Dans une étape ultérieure, la colle solidifie entre les surfaces texturées 2B et 4B, de telle manière que les substrats 2 et 4 sont solidarisés entre eux par l'intermédiaire de la couche de colle formant la couche centrale 3.

Afin de comprimer la couche de colle tout en maintenant une position des substrats 2 et 4 dans laquelle leurs surfaces texturées sont en regard l'une de l'autre avec leurs textures parallèles entre elles, il peut être avantageux d'utiliser un dispositif comprenant des moyens de déplacement en translation d'un substrat par rapport à l'autre selon un axe perpendiculaire au plan moyen du substrat. Un tel dispositif peut notamment comprendre deux plaques en vis-à-vis, destinées chacune à recevoir la surface lisse de l'un des deux substrats de telle sorte que les surfaces texturées des substrats sont en regard l'une de l'autre, et un système de translation des plaques en direction l'une de l'autre.

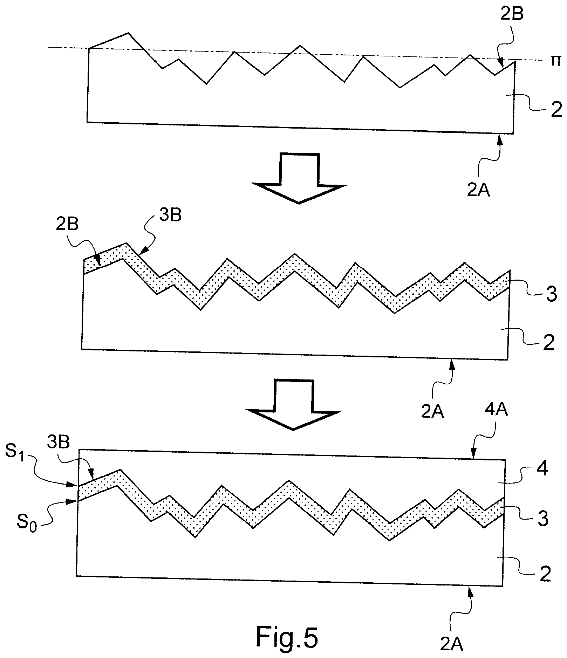

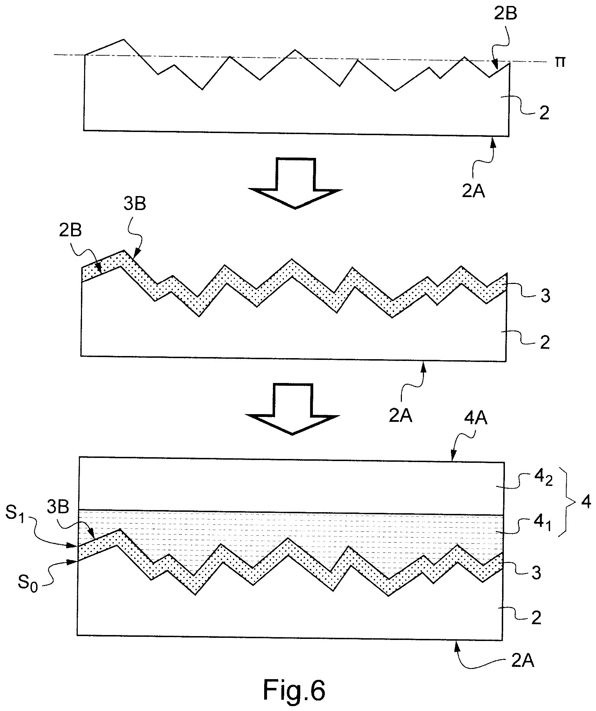

Les procédés illustrés sur les figures 5 et 6 diffèrent du procédé de la figure 4 en ce que la couche centrale 3 est déposée de manière conforme sur une surface texturée 2B d'un substrat transparent, rigide ou flexible, formant la couche externe 2 de l'élément en couches 1. La surface principale 2A de ce substrat opposée à la surface texturée 2B est lisse. Ce substrat 2 peut être, notamment, un substrat en verre texturé de type SATINOVO®, ALBARINO® ou MASTERGLASS®. En variante, le substrat 2 peut être un substrat à base de matériau polymère, rigide ou flexible.

Le dépôt conforme de la couche centrale 3, qu'elle soit monocouche ou formée par un empilement de plusieurs couches, est notamment réalisé, sous vide, par pulvérisation cathodique assistée par champ magnétique (pulvérisation dite "cathodique magnétron"). Cette technique permet de déposer, sur la surface texturée 2B du substrat 2, soit la couche unique de manière conforme, soit les différentes couches de l'empilement successivement de manière conforme. Il peut s'agir en particulier de couches minces diélectriques, notamment des couches de $Si_3N_4$, $SnO_2$, $ZnO$, $SnZnO_x$, AlN, NbO, NbN, $TiO_2$, $SiO_2$, $Al_2O_3$, $MgF_2$, $AlF_3$, ou de couches minces métalliques, notamment des couches d'argent, d'or, de titane, de niobium, de silicium, d'aluminium, d'alliage nickel-chrome (NiCr), ou d'alliages de ces métaux.

Dans le procédé de la figure 5, la deuxième couche externe 4 de l'élément en couches 1 est formée en recouvrant la couche centrale 3 avec une couche transparente d'indice de réfraction sensiblement égal à celui du substrat 2, qui se présente initialement dans un état visqueux adapté à des opérations de mise en forme et qui est durcissable. Cette couche vient, à l'état visqueux, épouser la texture de la surface 3B de la couche centrale 3 opposée au substrat 2. Ainsi, on garantit que, à l'état durci de la couche 4, la surface de contact $S_1$ entre la couche centrale 3 et la couche externe 4 est bien texturée et parallèle à la surface de contact $S_0$ entre la couche centrale 3 et la couche externe 2.

La couche 4 peut être une couche de matériau photoréticulable et/ou photopolymérisable, déposée sur la surface texturée 3B de la couche centrale 3 initialement sous forme liquide puis durcie par irradiation, notamment avec un rayonnement UV. En variante, la couche 4 peut être une couche de type sol-gel. Il peut s'agir, en particulier dans le cas où le substrat 2 est en verre, d'un verre de silice déposé par un procédé sol-gel sur la surface texturée 3B de la couche centrale 3.

Dans le procédé de la figure 6, la deuxième couche externe 4 de l'élément en couches 1 est formée par la superposition, à partir de la couche centrale 3, d'un intercalaire de feuilletage polymère transparent $4_1$ et d'un substrat transparent $4_2$ ayant tous les deux sensiblement le même indice de réfraction que le substrat 2. Dans le cas où le substrat 2 est en verre, la deuxième couche externe 4 peut par exemple être formée par la superposition d'un intercalaire de feuilletage $4_1$ en PVB ou EVA, positionné contre la surface texturée 3B de la couche centrale 3 opposée au substrat 2, et par un substrat $4_2$ en verre surmontant l'intercalaire $4_1$.

Dans ce cas, la couche externe 4 est associée au substrat 2, préalablement revêtu de la couche centrale 3, par un procédé classique de feuilletage. Dans ce procédé, on positionne successivement, à partir de la surface principale texturée 3B de la couche centrale 3, l'intercalaire de feuilletage polymère $4_1$ et le substrat $4_2$, puis on applique à la structure feuilletée ainsi formée une compression et/ou un chauffage, au moins à la température de transition vitreuse de l'intercalaire de feuilletage polymère $4_1$, par exemple dans une presse ou une étuve. Au cours de ce procédé de feuilletage, l'intercalaire $4_1$ se conforme à la texture de la surface texturée 3B de la couche centrale 3, ce qui garantit que la surface de contact $S_1$ entre la couche centrale 3 et la couche externe 4 est bien texturée et parallèle à la surface de contact $S_0$ entre la couche centrale 3 et la couche externe 2.

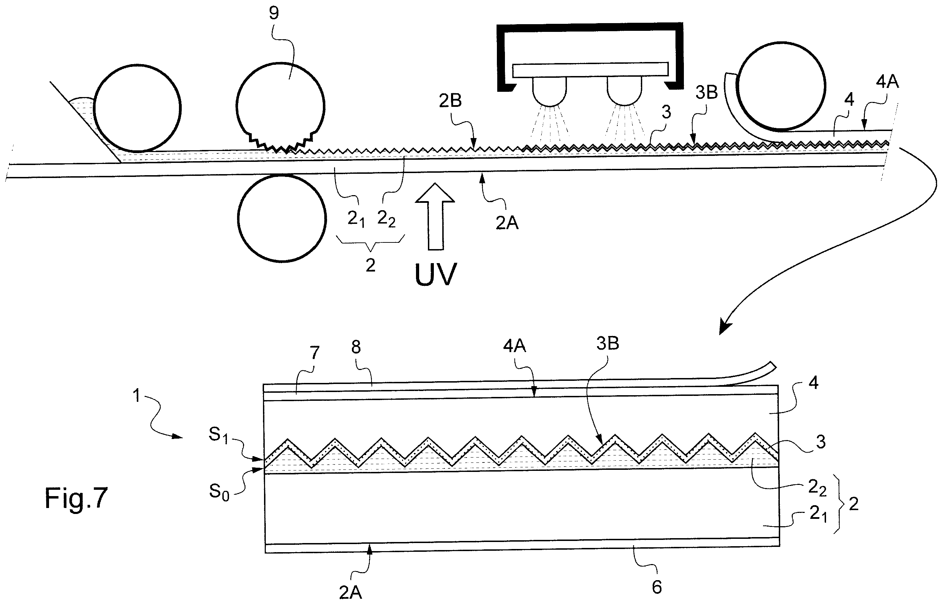

Dans le procédé illustré sur la figure 7, l'élément en couches 1 est un film flexible d'épaisseur totale de l'ordre de 200-300 $\mu$m. La couche externe 2 de cet élément en couches est formée par la superposition d'un film flexible $2_1$ en matériau polymère, dont les deux surfaces principales sont lisses, et d'une couche $2_2$ en matériau photoréticulable et/ou photopolymérisable sous l'action d'un rayonnement UV, appliquée contre l'une des surfaces principales lisses du film $2_1$.

A titre d'exemple, le film $2_1$ est un film de polyéthylène téréphtalate (PET) ayant une épaisseur de 100 $\mu$m, et la couche $2_2$ est une couche de résine durcissable aux UV de type KZ6661 commercialisée par la société JSR Corporation ayant une épaisseur d'environ 10 $\mu$m. Le film $2_1$ et la couche $2_2$ ont tous les deux sensiblement le même indice de réfraction, de l'ordre de 1,65 à 550 nm. A l'état durci, la couche de résine $2_2$ présente une bonne adhésion avec le PET.

La couche de résine $2_2$ est appliquée sur le film $2_1$ avec une viscosité permettant la mise en place d'une texturation sur sa surface 2B opposée au film $2_1$. Comme illustré sur la figure 7, la texturation de la surface 2B peut être réalisée à l'aide d'un rouleau 9 ayant à sa surface une texturation complémentaire de celle à former sur la couche $2_2$. Une fois la texturation formée, le film $2_1$ et la couche de résine $2_2$ superposés sont irradiés avec un rayonnement UV, comme montré par la flèche de la figure 7, ce qui permet la solidification de la couche de résine $2_2$ avec sa texturation et l'assemblage entre le film $2_1$ et la couche de résine $2_2$.

Une couche centrale 3 d'indice de réfraction différent de celui de la couche externe 2 est ensuite déposée de manière conforme sur la surface texturée 2B, par pulvérisation cathodique magnétron. Cette couche centrale peut être monocouche ou formée par un empilement de couches, comme décrit précédemment. Il peut s'agir par exemple d'une couche de $TiO_2$ ayant une épaisseur de l'ordre de 50 nm et un indice de réfraction de 2,45 à 550 nm.

Un deuxième film de PET ayant une épaisseur de 100 $\mu$m est ensuite déposée sur la couche centrale 3 de manière à former la deuxième couche externe 4 de l'élément en couches 1. Cette deuxième couche externe 4 est conformée à la surface texturée 3B de la couche centrale 3 opposée à la couche externe 2 par compression et/ou chauffage à la température de transition vitreuse du PET.

Une couche d'adhésif 7, recouverte d'une bande de protection (liner) 8 destinée à être retirée pour le collage, peut être rapportée sur l'une ou l'autre des surfaces externes 2A et 4A de l'élément en couches 1. L'élément en couches 1 se présente ainsi sous la forme d'un film flexible prêt à être rapporté par collage sur une surface, telle qu'une surface d'un vitrage, afin de conférer à cette surface des propriétés de réflexion diffuse. Dans l'exemple de la figure 7, la couche d'adhésif 7 et la bande de protection 8 sont rapportées sur la surface externe 4A de la couche 4. La surface externe 2A de la couche 2, qui est destinée à recevoir un rayonnement incident, est quant à elle munie d'un revêtement antireflet 6.

De manière particulièrement avantageuse, comme suggéré sur la figure 7, les différentes étapes du procédé peuvent être effectuées en continu sur une même ligne de fabrication.

La mise en place du ou des revêtements antireflet 6 de l'élément en couches 1 n'a pas été représentée sur les figures 4 à 7. Il est à noter que, dans chacun des procédés illustrés sur ces figures, le ou les revêtements antireflet 6 peuvent être mis en place sur les surfaces lisses 2A et/ou 4A des couches externes avant ou après l'assemblage de l'élément en couches, de manière indifférente.

L'invention n'est pas limitée aux exemples décrits et représentés. En particulier, lorsque l'élément en couches est un film flexible comme dans l'exemple de la figure 7, l'épaisseur de chaque couche externe formée à base d'un film polymère, par exemple à base d'un film de PET, peut être supérieure à 10 $\mu$m, notamment de l'ordre de 10 $\mu$m à 1 mm.

De plus, la texturation de la première couche externe 2 dans l'exemple de la figure 7 peut être obtenue sans recourir à une couche de résine durcissable $2_2$ déposée sur le film polymère $2_1$, mais directement par embossage à chaud du film polymère $2_1$, notamment par laminage à l'aide d'un rouleau texturé ou par pressage à l'aide d'un poinçon.

Afin d'améliorer la cohésion de l'élément en couches sous forme de film flexible illustré sur la figure 7, un intercalaire de feuilletage polymère peut également être intercalé entre la couche centrale 3 et le deuxième film polymère 4, où cet intercalaire de feuilletage a sensiblement le même indice de réfraction que les films 2 et 4 formant les couches externes. Dans ce cas, de manière analogue à l'exemple de la figure 6, la deuxième couche externe est formée par la superposition de l'intercalaire de feuilletage et du deuxième film polymère, et est associée à la première couche externe 2 préalablement revêtu de la couche centrale 3 par un procédé classique de feuilletage, dans lequel on applique à la structure feuilletée une compression et/ou un chauffage au moins à la température de transition vitreuse de l'intercalaire de feuilletage polymère.

## EXEMPLES

Les propriétés optiques de quatre exemples d'éléments en couches conformes à l'invention sont données dans le Tableau 1 ci-après. Les propriétés optiques des éléments en couches données dans le Tableau 1 sont les suivantes :

- $T_L$ : la transmission lumineuse dans le visible en %, mesurée selon la norme ISO 9050:2003 (illuminant D65 ; 2° Observateur) ;
- Haze T : le flou en transmission en %, mesuré au hazemeter selon la norme ASTM D 1003 pour un rayonnement incident sur l'élément en couches du côté de la couche externe 2 ;
- $R_L$ : la réflexion lumineuse totale dans le visible en % pour un rayonnement incident sur l'élément en couches du côté de la couche externe 2, mesurée selon la norme ISO 9050:2003 (illuminant D65 ; 2° Observateur) ;
- Haze R : le flou en réflexion en % pour un rayonnement incident sur l'élément en couches du côté de la couche externe 2, défini comme le ratio de la réflexion lumineuse non spéculaire dans le visible en % sur la réflexion lumineuse totale dans le visible en %, mesuré avec un appareil portable Minolta.

**Tableau 1**

| Exemple | n°1 | n°2 | | n°3 | | n°4 | |
|---|---|---|---|---|---|---|---|
| Couche externe 2 | SATINOVO® 6 mm | SATINOVO® 6 mm | | SATINOVO® 6 mm | | SATINOVO® 6 mm | |
| Couche centrale 3 | TiO$_2$ 55 nm | SiO$_2$ | 20 nm | Si$_3$N$_4$ | 50 nm | Si$_3$N$_4$ | 16 nm |
| | | Si | 10 nm | ZnO | 6 nm | ZnO | 5 nm |
| | | SiO$_2$ | 20 nm | Ag | 20 nm | NiCr | 3 nm |
| | | | | ZnO | 6 nm | Ag | 8 nm |
| | | | | Si$_3$N$_4$ | 50 nm | NiCr | 1 nm |
| | | | | | | ZnO | 6 nm |
| | | | | | | Si$_3$N$_4$ | 35 nm |
| | | | | | | NbN | 1 nm |
| | | | | | | Si$_3$N$_4$ | 33 nm |
| | | | | | | ZnO | 4 nm |
| | | | | | | Ag | 14 nm |

(suite)

| Exemple | n°1 | n°2 | n°3 | n°4 |
|---|---|---|---|---|
| | | | | NiCr    1 nm<br>ZnO    4 nm<br>$Si_3N_4$    34 nm<br>$SnZnO_x$    3 nm |
| Couche externe 4 | NOA75® 100 $\mu$m<br>PLANILUX® 4 mm | NOA75® 100 $\mu$m<br>PLANILUX® 4 mm | NOA65® 100 $\mu$m<br>PLANILUX® 4 mm | EVA 0,4 mm<br>PLANILUX® 4 mm |
| Propriétés de l'élément en couches | | | | |
| $T_L$ (%) | 76,7 % | 54,6 % | 49,6 % | 35,4 % |
| Haze T (%) | 2,8 % | 1,9 % | 4,8 % | 6,0 % |
| $R_L$ (%) | 14,9 % | 14,3 % | 18,3 % | 10,0 % |
| Haze R (%) | 59,0 % | 60,0 % | 89,9 % | 49,4 % |
| Couleur en réflexion | Blanc | Bleuté | Cuivre | Vert |

Pour chacun des exemples n°1 à 4 donnés dans le Tableau 1, le substrat utilisé en tant que couche externe 2 est un verre SATINOVO® de la société Saint-Gobain Glass ayant une épaisseur de 6 mm et présentant sur l'une de ses surfaces principales une texture obtenue par attaque acide. La hauteur moyenne des motifs de la texturation de la couche externe 2, qui correspond à la rugosité Ra de la surface texturée du verre SATINOVO®, est de l'ordre de 3 $\mu$m.

De plus, pour chaque exemple n°1 à 4, la ou les couches constitutives de la couche centrale 3 ont été déposées par pulvérisation cathodique magnétron sur la surface texturée 2B de la couche externe 2, avec les conditions de dépôt suivantes :

**Tableau 2**

| Couche | Cible employée | Pression de dépôt | Gaz |
|---|---|---|---|
| $TiO_2$ | $TiO_2$ | $2.10^{-3}$ mbar | Ar/(Ar + O2) à 30 % |
| $SiO_2$ | Si:Al à 98:2 % wt | $2.10^{-3}$ mbar | Ar/(Ar + O2) à 50 % |
| Si | Si | $5.10^{-3}$ mbar | Ar à 100 % |
| $Si_3N_4$ | Si:Al à 92:8 % wt | $2.10^{-3}$ mbar | Ar/(Ar + N2) à 30 % |
| ZnO | Zn:Al à 98:2 % wt | $2.10^{-3}$ mbar | Ar/(Ar + O2) à 50 % |
| Ag | Ag | $5.10^{-3}$ mbar | Ar à 100 % |
| NiCr | NiCr | $5.10^{-3}$ mbar | Ar à 100 % |
| NbN | Nb | $2.10^{-3}$ mbar | Ar/(Ar + N2) à 30 % |
| $SnZnO_x$ | SnZn:Sb à 34:65:1 % wt | $2.10^{-3}$ mbar | Ar/(Ar + O2) à 50 % |

Dans les exemples n°1 à 3, la couche externe 4 est formée par une couche de résine NOA75® ou NOA65® de la société Norland Optics ayant une épaisseur de l'ordre de 100 $\mu$m, associée à un verre PLANILUX® de la société Saint-Gobain Glass ayant une épaisseur de 4 mm. Dans chaque exemple n°1 à 3, la résine est déposée à l'état liquide sur la surface texturée 3B de la couche centrale 3 opposée à la couche externe 2, de telle manière qu'elle épouse la texture de cette surface 3B, puis durcie sous l'action d'un rayonnement UV après avoir été revêtue du verre PLANILUX®.

Dans l'exemple n°4, la couche externe 4 est formée par un intercalaire de feuilletage en EVA ayant une épaisseur de 0,4 mm, associé à un verre PLANILUX® de la société Saint-Gobain Glass ayant une épaisseur de 4 mm. L'intercalaire en EVA est positionné contre la surface texturée 3B de la couche centrale 3 opposée à la couche externe 2, puis recouvert avec le verre PLANILUX®. La structure feuilletée obtenue est compressée et passée à l'étuve à une température de 105°C, ce qui permet l'assemblage de l'élément en couches et la conformation de l'intercalaire en EVA à la texture de la surface 3B de la couche centrale 3.

Les résultats du Tableau 1 montrent que l'on obtient, pour chacun des exemples n°1 à 4 :

∘ Une bonne transmission lumineuse associée à un faible flou en transmission, c'est-à-dire une bonne transmission spéculaire à travers l'élément en couches. Ainsi, conformément aux objectifs de l'invention, la vision à travers l'élément en couches est nette. Cette propriété se vérifie visuellement sur les échantillons qui sont, pour les quatre exemples, transparents et non translucides.

∘ Un flou en réflexion important, c'est-à-dire un pourcentage élevé de réflexion diffuse par rapport à la réflexion totale sur l'élément en couches. Conformément aux objectifs de l'invention, on évite ainsi les réflexions de type "miroir" sur l'élément en couches.

Le pourcentage de réflexion diffuse par rapport à la réflexion totale sur l'élément en couches peut être modulé en jouant sur plusieurs paramètres de l'élément en couches. En particulier, ce pourcentage peut être augmenté par la mise en place de l'une et/ou l'autre des mesures suivantes :

- prévoir un revêtement antireflet sur la ou chaque surface externe de l'élément en couches qui est destinée à recevoir un rayonnement incident, ce qui permet de limiter les réflexions spéculaires sur cette surface externe lisse et ainsi de privilégier un mode de réflexion diffuse sur les surfaces de contact texturées entre les couches adjacentes de l'élément en couches, plutôt qu'un mode de réflexion spéculaire sur sa surface externe lisse ;
- augmenter le saut d'indice de réfraction à la surface de contact entre la ou chaque couche externe de l'élément en couches qui est située du côté d'incidence du rayonnement et la couche centrale, et/ou à chaque surface de contact entre des couches adjacentes constitutives de la couche centrale, ce qui permet d'augmenter la réflexion de rayonnement sur ces surfaces de contact texturées, qui est une réflexion diffuse.

## Revendications

1. Elément en couches (1) transparent ayant deux surfaces principales externes (2A, 4A) lisses, **caractérisé en ce qu'**il comprend :

   - deux couches externes (2, 4), qui forment chacune une des deux surfaces principales externes (2A, 4A) de l'élément en couches et qui sont constituées en des matériaux diélectriques ayant sensiblement le même indice de réfraction (n2, n4), et
   - une couche centrale (3) intercalée entre les couches externes, cette couche centrale (3) étant formée soit par une couche unique qui est une couche diélectrique d'indice de réfraction (n3) différent de celui des couches externes ou une couche métallique, soit par un empilement de couches $(3_1, 3_2, ..., 3_k)$ qui comprend au moins une couche diélectrique d'indice de réfraction différent de celui des couches externes ou une couche métallique,

   où chaque surface de contact $(S_0, S_1, ..., S_k)$ entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents, dans lequel la ou chaque couche constitutive de la couche centrale (3) est une couche déposée par pulvérisation cathodique sur une surface texturée.

2. Elément en couches selon la revendication 1, **caractérisé en ce que** la valeur absolue de la différence d'indice de réfraction à 550 nm entre, d'une part, les couches externes (2, 4) et, d'autre part, au moins une couche diélectrique de la couche centrale (3) est supérieure ou égale à 0,3, de préférence supérieure ou égale à 0,5.

3. Elément en couches selon l'une quelconque des revendications 1 ou 2, **caractérisé en ce qu'**au moins l'une des deux couches externes (2, 4) est un substrat transparent dont l'une des surfaces principales (2B, 4B) est texturée et l'autre surface principale (2A, 4A) est lisse.

4. Elément en couches selon l'une quelconque des revendications 1 à 3, **caractérisé en ce que** la couche centrale (3) est formée par une couche de matériau diélectrique d'indice de réfraction différent de celui des couches externes, les couches externes (2, 4) étant assemblées au moyen de la couche centrale (3).

5. Elément en couches selon l'une quelconque des revendications 1 à 3, **caractérisé en ce que** la couche centrale (3) comprend au moins une couche mince diélectrique et/ou au moins une couche mince métallique.

6. Elément en couches selon l'une quelconque des revendications 1 à 3, **caractérisé en ce que** la couche centrale (3) est un empilement transparent de couches minces comprenant une alternance de « n » couches fonctionnelles métalliques, notamment de couches fonctionnelles à base d'argent ou d'alliage métallique contenant de l'argent, et de « (n + 1) » revêtements antireflet, avec $n \geq 1$, où chaque couche fonctionnelle métallique est disposée entre deux revêtements antireflet.

7.  Elément en couches selon l'une quelconque des revendications précédentes, **caractérisé en ce que**, pour chaque couche de la couche centrale (3) qui est intercalée entre des couches de nature, diélectrique ou métallique, différente de la sienne ou d'indices de réfraction différents du sien, l'épaisseur de cette couche, prise perpendiculairement à ses surfaces de contact avec les couches adjacentes, est inférieure à 1/4 de la hauteur moyenne des motifs de la texture de chacune de ses surfaces de contact avec les couches adjacentes.

8.  Elément en couches selon l'une quelconque des revendications précédentes, **caractérisé en ce qu'**il comprend, sur au moins l'une de ses surfaces principales externes (2A, 4A), un revêtement antireflet (6) à l'interface entre l'air et le matériau constitutif de la couche externe (2, 4) formant ladite surface principale externe.

9.  Elément en couches selon l'une quelconque des revendications précédentes, **caractérisé en ce que** les surfaces principales externes (2A, 4A) de l'élément en couches sont parallèles entre elles.

10. Elément en couches selon l'une quelconque des revendications précédentes, **caractérisé en ce qu'**une première couche externe (2) parmi les deux couches externes est un substrat transparent dont l'une des surfaces principales (2B) est texturée et l'autre surface principale (2A) est lisse, la couche centrale (3) étant formée soit par une couche unique, qui est une couche diélectrique d'indice de réfraction différent de celui de la première couche externe (2) ou une couche métallique, déposée de manière conforme sur la surface principale texturée (2B) de la première couche externe, soit par un empilement de couches $(3_1, 3_2, ..., 3_k)$, qui comprend au moins une couche diélectrique d'indice de réfraction différent de celui de la première couche externe (2) ou une couche métallique, déposées successivement de manière conforme sur la surface principale texturée (2B) de la première couche externe.

11. Elément en couches selon la revendication 10, **caractérisé en ce que** la deuxième couche externe (4) comprend une couche ayant sensiblement le même indice de réfraction que la première couche externe (2), déposée sur la surface principale texturée (3B) de la couche centrale (3) opposée à la première couche externe (2) en étant initialement dans un état visqueux adapté à des opérations de mise en forme.

12. Elément en couches selon la revendication 10, **caractérisé en ce que** la deuxième couche externe (4) comprend un intercalaire de feuilletage polymère $(4_1)$ ayant sensiblement le même indice de réfraction que la première couche externe (2), positionné contre la surface principale texturée (3B) de la couche centrale (3) opposée à la première couche externe (2).

13. Procédé de fabrication d'un élément en couches (1) selon l'une quelconque des revendications 1 à 9, **caractérisé en ce qu'**il comprend des étapes dans lesquelles :

    - on fournit, en tant que couches externes (2, 4), deux substrats transparents constitués en des matériaux diélectriques ayant sensiblement le même indice de réfraction, où chaque substrat transparent a l'une de ses surfaces principales (2B, 4B) qui est texturée et son autre surface principale (2A, 4A) qui est lisse, les textures des deux substrats transparents étant complémentaires l'une de l'autre ;
    on dépose une couche centrale (3) de manière conforme sur la première couche externe (2) par pulvérisation cathodique, la couche centrale (3) comprenant au moins une couche diélectrique d'indice de réfraction (n3) différent de celui (n2, n4) des couches externes ou une couche métallique;
    - on prend en sandwich une couche centrale (3) entre les surfaces principales texturées (2B, 4B) des deux substrats transparents qui sont positionnées en regard l'une de l'autre de telle sorte que leurs textures sont parallèles l'une à l'autre.

14. Procédé de fabrication d'un élément en couches (1) selon l'une quelconque des revendications 1 à 12, **caractérisé en ce qu'**il comprend des étapes dans lesquelles :

    - on fournit, en tant que première couche externe (2), un substrat transparent dont l'une des surfaces principales (2B) est texturée et l'autre surface principale (2A) est lisse ;
    - on dépose par pulvérisation cathodique une couche centrale (3) sur la surface principale texturée (2B) de la première couche externe soit, lorsque la couche centrale (3) est formée par une couche unique, qui est une couche diélectrique d'indice de réfraction différent de celui de la première couche externe (2) ou une couche métallique, en déposant la couche centrale (3) de manière conforme sur ladite surface principale texturée (2B), soit, lorsque la couche centrale (3) est formée par un empilement de couches ($3_1$, $3_2$, ..., $3_k$) comprenant au moins une couche diélectrique d'indice de réfraction différent de celui de la première couche externe (2) ou une couche métallique, en déposant les couches ($3_1$, $3_2$, ..., $3_k$) de la couche centrale (3) successivement de manière conforme sur ladite surface principale texturée (2B) ;
- on forme la deuxième couche externe (4) sur la surface principale texturée (3B) de la couche centrale (3) opposée à la première couche externe (2), où la première couche externe (2) et la deuxième couche externe (4) sont constituées en des matériaux diélectriques ayant sensiblement le même indice de réfraction.

15. Procédé selon la revendication 14, **caractérisé en ce qu'**on dépose la couche centrale (3) de manière conforme, ou les couches ($3_1$, $3_2$, ..., $3_k$) de la couche centrale (3) successivement de manière conforme, sur la surface principale texturée (2B) de la première couche externe (2) par pulvérisation cathodique assistée par un champ magnétique.

16. Procédé selon l'une quelconque des revendications 14 ou 15, **caractérisé en ce qu'**on forme la deuxième couche externe (4) en déposant, sur la surface principale texturée (3B) de la couche centrale (3) opposée à la première couche externe (2), une couche qui a sensiblement le même indice de réfraction que la première couche externe (2) et qui se présente initialement dans un état visqueux adapté à des opérations de mise en forme.

17. Procédé selon l'une quelconque des revendications 14 ou 15, **caractérisé en ce qu'**on forme la deuxième couche externe (4) en positionnant, contre la surface principale texturée (3B) de la couche centrale (3) opposée à la première couche externe (2), une couche à base de matériau polymère ayant sensiblement le même indice de réfraction que la première couche externe (2), puis en conformant cette couche à base de matériau polymère contre la surface principale texturée (3B) de la couche centrale (3) par compression et/ou chauffage.

18. Façade de bâtiment, notamment façade de terminal d'aéroport, comprenant au moins un élément en couches (1) selon l'une quelconque des revendications 1 à 12.

19. Ecran d'affichage, notamment vitrage de système Head Up Display, comprenant un élément en couches (1) selon l'une quelconque des revendications 1 à 12.

20. Utilisation d'un élément en couches (1) selon l'une quelconque des revendications 1 à 12 comme tout ou partie d'un vitrage pour véhicule, pour bâtiment, pour mobilier urbain, pour ameublement intérieur, pour écran d'affichage, pour système Head Up Display.

**Patentansprüche**

1. Transparentes Schichtelement (1) mit zwei glatten Hauptaußenflächen (2A, 4A), **dadurch gekennzeichnet, dass** es umfasst:

- zwei Außenschichten (2, 4), die jeweils eine der zwei Hauptaußenflächen (2A, 4A) des Schichtelements bilden und aus dielektrischen Materialien mit im Wesentlichen demselben Brechungsindex (n2, n4) bestehen, und
- eine zentrale Schicht (3), die zwischen den Außenschichten angeordnet ist, wobei diese zentrale Schicht (3) entweder durch eine einzige Schicht gebildet ist, die eine dielektrische Schicht mit einem Brechungsindex (n3) ist, der von demjenigen der Außenschichten verschieden ist, oder eine metallische Schicht, oder durch einen Schichtstapel ($3_1$, $3_2$, ..., $3_k$), der mindestens eine dielektrische Schicht mit einem Brechungsindex, der von demjenigen der Außenschichten verschiedenen ist, oder eine metallische Schicht umfasst,

wobei jede Kontaktfläche ($S_0$, $S_1$, ..., $S_k$) zwischen zwei benachbarten Schichten des Schichtelements, wovon die eine dielektrisch und die andere metallisch ist, oder die zwei dielektrische Schichten mit verschiedenen Brechungsindizes sind, texturiert und parallel zu den anderen texturierten Kontaktflächen zwischen zwei benachbarten Schichten ist, wovon die eine dielektrisch und die andere metallisch ist oder die zwei dielektrische Schichten mit verschiedenen Brechungsindizes sind, wobei die oder jede Schicht, aus der die zentrale Schicht (3) besteht, eine durch Sputtern auf einer texturierten Fläche abgeschiedene Schicht ist.

**2.** Schichtelement nach Anspruch 1, **dadurch gekennzeichnet, dass** der Absolutwert der Brechungsindexdifferenz bei 550 nm zwischen den Außenschichten (2, 4) einerseits und mindestens einer dielektrischen Schicht der zentralen Schicht (3) andererseits größer oder gleich 0,3, vorzugsweise größer oder gleich 0,5 ist.

**3.** Schichtelement nach einem der Ansprüche 1 oder 2, **dadurch gekennzeichnet, dass** mindestens eine der zwei Außenschichten (2, 4) ein transparentes Substrat ist, wovon eine der Hauptflächen (2B, 4B) texturiert ist und die andere Hauptfläche (2A, 4A) glatt ist.

**4.** Schichtelement nach einem der Ansprüche 1 bis 3, **dadurch gekennzeichnet, dass** die zentrale Schicht (3) durch eine Schicht aus dielektrischem Material mit einem von den Außenschichten verschiedenen Brechungsindex gebildet ist, wobei die Außenschichten (2, 4) mittels der zentralen Schicht (3) verbunden sind.

**5.** Schichtelement nach einem der Ansprüche 1 bis 3, **dadurch gekennzeichnet, dass** die zentrale Schicht (3) mindestens eine dünne dielektrische Schicht und/oder mindestens eine dünne metallische Schicht umfasst.

**6.** Schichtelement nach einem der Ansprüche 1 bis 3, **dadurch gekennzeichnet, dass** die zentrale Schicht (3) ein transparenter Stapel dünner Schichten ist, der einen Wechsel von "$n$" metallischen Funktionsschichten, insbesondere von Funktionsschichten auf Basis von Silber oder einer silberhaltigen Metalllegierung, und von "$(n + 1)$" Antireflexionsbeschichtungen mit $n \geq 1$ umfasst, wobei jede metallische Funktionsschicht zwischen zwei Antireflexionsbeschichtungen angeordnet ist.

**7.** Schichtelement nach einem der vorhergehenden Ansprüche, **dadurch gekennzeichnet, dass** für jede Schicht der zentralen Schicht (3), die zwischen Schichten einer Art, dielektrisch oder metallisch, die von ihrer eigenen verschieden ist, oder Brechungsindizes aufweisen, die von dem eigenen verschieden sind, angeordnet ist, die Dicke dieser Schicht, senkrecht zu ihren Kontaktflächen mit den benachbarten Schichten genommen, weniger als 1/4 der durchschnittlichen Höhe der Texturmuster jeder ihrer Kontaktflächen mit den benachbarten Schichten beträgt.

**8.** Schichtelement nach einem der vorhergehenden Ansprüche, **dadurch gekennzeichnet, dass** es auf mindestens einer seiner Hauptaußenflächen (2A, 4A) eine Antireflexionsbeschichtung (6) an der Grenzfläche zwischen der Luft und dem Material umfasst, aus dem die Außenschicht (2, 4) besteht, die die Hauptaußenfläche bildet.

**9.** Schichtelement nach einem der vorhergehenden Ansprüche, **dadurch gekennzeichnet, dass** die Hauptaußenflächen (2A, 4A) des Schichtelements zueinander parallel sind.

**10.** Schichtelement nach einem der vorhergehenden Ansprüche, **dadurch gekennzeichnet, dass** eine erste Außenschicht (2) von den zwei Außenschichten ein transparentes Substrat ist, von dem die eine der Hauptflächen (2B) texturiert ist und die andere Hauptfläche (2A) glatt ist, wobei die zentrale Schicht (3) entweder durch eine einzige Schicht gebildet ist, die eine dielektrische Schicht mit einem Brechungsindex ist, der von demjenigen der ersten Außenschicht (2) verschieden ist, oder eine auf der texturierten Hauptfläche (2B) der ersten Außenschicht entsprechend abgeschiedene metallische Schicht,, oder durch einen Schichtstapel ($3_1$, $3_2$, ..., $3_k$), der mindestens eine dielektrische Schicht mit einem Brechungsindex umfasst, der von demjenigen der ersten Außenschicht (2) verschieden ist, oder eine metallische Schicht, die aufeinanderfolgend auf der texturierten Hauptfläche (2B) der ersten Außenschicht entsprechend abgeschieden sind.

**11.** Schichtelement nach Anspruch 10, **dadurch gekennzeichnet, dass** die zweite Außenschicht (4) eine Schicht mit im Wesentlichen demselben Brechungsindex wie die erste Außenschicht (2) umfasst, die auf der texturierten Hauptfläche (3B) der zentralen Schicht (3) abgeschieden ist, die der ersten Außenschicht (2) gegenüberliegt, indem sie sich anfangs in einem viskosen Zustand befindet, der für Formgebungsvorgänge geeignet ist.

**12.** Schichtelement nach Anspruch 10, **dadurch gekennzeichnet, dass** die zweite Außenschicht (4) eine polymere Laminierungszwischenschicht ($4_1$) umfasst, die im Wesentlichen den gleichen Brechungsindex wie die erste Außenschicht (2) hat, die gegen die texturierte Hauptfläche (3B) der zentralen Schicht (3) gegenüber der ersten Außenschicht (2) positioniert ist.

**13.** Verfahren zur Herstellung eines Schichtelements (1) nach einem der Ansprüche 1 bis 9, **dadurch gekennzeichnet, dass** es Schritte umfasst, bei denen:

    - als Außenschichten (2, 4) zwei transparente Substrate, bestehend aus dielektrischen Materialien mit im Wesentlichen demselben Brechungsindex, bereitgestellt werden, wobei jedes transparente Substrat eine seiner Hauptflächen (2B, 4B) aufweist, die texturiert ist und dessen andere Hauptfläche (2A, 4A), die glatt ist, wobei die Texturen der zwei transparenten Substrate zueinander komplementär sind;

- eine zentrale Schicht (3) auf der ersten Außenschicht (2) durch Sputtern entsprechend abgeschieden wird, wobei die zentrale Schicht (3) mindestens eine dielektrische Schicht mit einem Brechungsindex (n3), der von dem (n2, n4) der Außenschichten verschieden ist, oder eine metallische Schicht umfasst;

- eine zentrale Schicht (3) zwischen den texturierten Hauptflächen (2B, 4B) der zwei transparenten Substrate, die einander derart zugewandt sind, dass deren Texturen zueinander parallel sind, sandwichartig eingefasst wird.

14. Verfahren zur Herstellung eines Schichtelements (1) nach einem der Ansprüche 1 bis 12, **dadurch gekennzeichnet, dass** es Schritte umfasst, bei denen:

- als erste Außenschicht ein transparentes Substrat (2) bereitgestellt wird, von dem eine der Hauptflächen (2B) texturiert ist und die andere Hauptfläche (2A) glatt ist;

- eine zentrale Schicht (3) durch Sputtern auf der texturierten Hauptfläche (2B) der ersten Außenschicht abgeschieden wird, entweder, wenn die zentrale Schicht (3) durch eine einzigne Schicht gebildet ist, die eine dielektrische Schicht mit einem Brechungsindex ist, der von demjenigen der ersten Außenschicht (2) verschieden ist, oder eine metallische Schicht, indem die zentrale Schicht (3) auf der texturierten Hauptfläche (2B) entsprechend abgeschieden wird, oder, wenn die zentrale Schicht (3) durch einen Schichtstapel $(3_1, 3_2, ..., 3_k)$ gebildet ist, der mindestens eine dielektrische Schicht mit einem Brechungsindex umfasst, der von demjenigen der ersten Außenschicht (2) verschieden ist, oder eine metallische Schicht, indem die Schichten $(3_1, 3_2, ..., 3_k)$ der zentralen Schicht (3) aufeinanderfolgend auf der genannten texturierten Hauptfläche (2B) entsprechend abgeschieden werden;

- die zweite Außenschicht (4) auf der der ersten Außenschicht (2) gegenüberliegenden texturierten Hauptfläche (3B) der zentralen Schicht (3) gebildet wird, wobei die erste Außenschicht (2) und die zweite Außenschicht (4) aus dielektrischen Materialien mit im Wesentlichen gleichem Brechungsindex bestehen.

15. Verfahren nach Anspruch 14, **dadurch gekennzeichnet, dass** die zentrale Schicht (3) entsprechend abgeschieden wird oder die Schichten $(3_1, 3_2, ..., 3_k)$ der zentralen Schicht (3) nacheinander auf der texturierten Hauptfläche (2B) der ersten Außenschicht (2) durch magnetfeldunterstütztes Sputtern entsprechend abgeschieden werden.

16. Verfahren nach einem der Ansprüche 14 oder 15, **dadurch gekennzeichnet, dass** die zweite Außenschicht (4) durch Abscheiden einer Schicht auf der der ersten Außenschicht (2) gegenüberliegenden texturierten Hauptfläche (3B) der zentralen Schicht (3) gebildet wird, die im Wesentlichen den gleichen Brechungsindex wie die erste Außenschicht (2) aufweist und die sich anfangs in einem viskosen Zustand befindet, der für Formgebungsvorgänge geeignet ist.

17. Verfahren nach einem der Ansprüche 14 oder 15, **dadurch gekennzeichnet, dass** die zweite Außenschicht (4) durch Positionieren einer Schicht auf der Basis eines polymeren Materials mit im Wesentlichen dem gleichen Brechungsindex wie die erste Außenschicht (2) gegen die texturierte Hauptfläche (3B) der zentralen Schicht (3) gegenüber der ersten Außenschicht (2) gebildet wird, und dann diese Schicht auf der Basis eines polymeren Materials gegen die texturierte Hauptfläche (3B) der zentralen Schicht (3) durch Kompression und/oder Erwärmung geformt wird.

18. Gebäudefassade, insbesondere Flughafenterminalfassade, umfassend mindestens ein Schichtelement (1) nach einem der Ansprüche 1 bis 12.

19. Bildschirm, insbesondere Head-Up-Display-Systemverglasung, umfassend ein Schichtelement (1) nach einem der Ansprüche 1 bis 12.

20. Verwendung eines Schichtelements (1) nach einem der Ansprüche 1 bis 12 als Ganzes oder Teil einer Verglasung für Fahrzeuge, im Bauwesen, für Stadtmöbel, für Innenmöbel, für Bildschirme, für Head-Up-Display-System.

**Claims**

1. A transparent layered element (1) having two smooth outer main surfaces (2A, 4A), **characterized in that** it comprises:

- two outer layers (2, 4), which each form one of the two outer main surfaces (2A, 4A) of the layered element and which are constituted of dielectric materials having substantially the same refractive index (n2, n4), and
- a central layer (3) inserted between the outer layers, this central layer (3) being formed either by a single layer which is a dielectric layer having a refractive index (n3) different from that of the outer layers or a metal layer, or by a stack of layers $(3_1, 3_2, ..., 3_k)$ which comprises at least one dielectric layer having a refractive index different from that of the outer layers or a metal layer,

where each contact surface $(S_0, S_1, ..., S_k)$ between two adjacent layers of the layered element which are one a dielectric layer and the other a metal layer, or which are two dielectric layers having different refractive indices, is textured and parallel to the other textured contact surfaces between two adjacent layers which are one a dielectric layer and the other a metal layer or which are two dielectric layers having different refractive indices, **characterized in that** the or each constituent layer of the central layer (3) is a layer deposited by sputtering onto a textured surface.

2. The layered element as claimed in claim 1, **characterized in that** the absolute value of the difference in refractive index at 550 nm between, on the one hand, the outer layers (2, 4) and, on the other hand, at least one dielectric layer of the central layer (3) is greater than or equal to 0.3, preferably greater than or equal to 0.5.

3. The layered element as claimed in either one of claims 1 and 2, **characterized in that** at least one of the two outer layers (2, 4) is a transparent substrate, of which one of the main surfaces (2B, 4B) is textured and the other main surface (2A, 4A) is smooth.

4. The layered element as claimed in any one of claims 1 to 3, **characterized in that** the central layer (3) is formed by a layer of dielectric material having a refractive index different from that of the outer layers, the outer layers (2, 4) being assembled by means of the central layer (3).

5. The layered element as claimed in any one of claims 1 to 3, **characterized in that** the central layer (3) comprises at least one dielectric thin layer and/or at least one metal thin layer.

6. The layered element as claimed in any one of claims 1 to 3, **characterized in that** the central layer (3) is a transparent stack of thin layers comprising an alternation of "$n$" metal functional layers, especially of functional layers based on silver or on a metal alloy containing silver, and of "$(n + 1)$" antireflection coatings, with $n \geq 1$, where each metal functional layer is deposited between two antireflection coatings.

7. The layered element as claimed in any one of the preceding claims, **characterized in that**, for each layer of the central layer (3) which is inserted between layers having a nature, dielectric or metal, different from its own or refractive indices different from its own, the thickness of this layer, taken perpendicular to its contact surfaces with the adjacent layers, is less than 1/4 of the mean height of the features of the texture of each of its contact surfaces with the adjacent layers.

8. The layered element as claimed in any one of the preceding claims, **characterized in that** it comprises, on at least one of its outer main surfaces (2A, 4A), an antireflection coating (6) at the interface between the air and the constituent material of the outer layer (2, 4) forming said outer main surface.

9. The layered element as claimed in any one of the preceding claims, **characterized in that** the outer main surfaces (2A, 4A) of the layered element are parallel to one another.

10. The layered element as claimed in any one of the preceding claims, **characterized in that** a first outer layer (2) among the two outer layers is a transparent substrate, of which one of the main surfaces (2B) is textured and the other main surface (2A) is smooth, the central layer (3) being formed either by a single layer, which is a dielectric layer having a refractive index different from that of the first outer layer (2) or a metal layer, deposited in a conformal manner on the textured main surface (2B) of the first outer layer, or by a stack of layers $(3_1, 3_2, ..., 3_k)$, which comprises at least one dielectric layer having a refractive index different from that of the first outer layer (2) or a metal layer, deposited successively in a conformal manner onto the textured main surface (2B) of the first outer layer.

11. The layered element as claimed in claim 10, **characterized in that** the second outer layer (4) comprises a layer having substantially the same refractive index as the first outer layer (2), deposited on the textured main surface (3B) of the central layer (3) on the opposite side from the first outer layer (2) by being initially in a viscous state suitable for forming operations.

12. The layered element as claimed in claim 10, **characterized in that** the second outer layer (4) comprises a polymer lamination interlayer ($4_1$) having substantially the same refractive index as the first outer layer (2), positioned against the textured main surface (3B) of the central layer (3) on the opposite side from the first outer layer (2).

13. A process for manufacturing a layered element (1) as claimed in any one of claims 1 to 9, **characterized in that** it comprises steps in which:

   - as outer layers (2, 4), two transparent substrates are provided that are constituted of dielectric materials having substantially the same refractive index, where each transparent substrate has one of its main surfaces (2B, 4B) which is textured and its other main surface (2A, 4A) which is smooth, the textures of the two transparent substrates being complementary to other another;
   - a central layer (3) is deposited in a conformal manner on the outer layer (2) by sputtering onto a textured surface, the central layer (3) comprising at least one dielectric layer having a refractive index (n3) different from that (n2, n4) of the outer layers or a metal layer,
   - the central layer (3) is sandwiched between the textured main surfaces (2B, 4B) of the two transparent substrates which are positioned opposite one another so that their textures are parallel to one another.

14. A process for manufacturing a layered element (1) as claimed in any one of claims 1 to 12, **characterized in that** it comprises steps in which:

   - as the first outer layer (2), a transparent substrate is provided, of which one of the main surfaces (2B) is textured and the other main surface (2A) is smooth;
   - a central layer (3) is deposited by sputtering on the textured main surface (2B) of the first outer layer either, when the central layer (3) is formed by a single layer, which is a dielectric layer having a refractive index different from that of the first outer layer (2) or a metal layer, by depositing the central layer (3) in a conformal manner on said textured main surface (2B), or, when the central layer (3) is formed by a stack of layers ($3_1$, $3_2$, ..., $3_k$) comprising at least one dielectric layer having a refractive index different from that of the first outer layer (2) or a metal layer, by depositing the layers ($3_1$, $3_2$, ..., $3_k$) of the central layer (3) successively in a conformal manner on said textured main surface (2B);
   - the second outer layer (4) is formed on the textured main surface (3B) of the central layer (3) on the opposite side from the first outer layer (2), where the first outer layer (2) and the second outer layer (4) are constituted of dielectric materials having substantially the same refractive index.

15. The process as claimed in claim 14, **characterized in that** the central layer (3) is deposited in a conformal manner, or the layers ($3_1$, $3_2$, ..., $3_k$) of the central layer (3) are deposited successively in a conformal manner, on the textured main surface (2B) of the first outer layer (2) by magnetron sputtering assisted with a magnetic field.

16. The process as claimed in either one of claims 14 and 15, **characterized in that** the second outer layer (4) is formed by depositing, on the textured main surface (3B) of the central layer (3) on the opposite side from the first outer layer (2), a layer that has substantially the same refractive index as the first outer layer (2) and that is initially in a viscous state suitable for forming operations.

17. The process as claimed in either one of claims 14 and 15, **characterized in that** the second outer layer (4) is formed by positioning, against the textured main surface (3B) of the central layer (3) on the opposite side from the first outer layer (2), a layer based on a polymer material having substantially the same refractive index as the first outer layer (2), then by conforming this layer based on a polymer material against the textured main surface (3B) of the central layer (3) by compression and/or heating.

18. A building facade, especially an airport terminal facade, comprising at least one layered element (1) as claimed in any one of claims 1 to 12.

19. A display screen, especially a head-up display system glazing, comprising a layered element (1) as claimed in any one of claims 1 to 12.

20. The use of a layered element (1) as claimed in any one of claims 1 to 12 as all or part of a glazing for a vehicle, for a building, for street furniture, for interior furnishings, for a display screen, or for a head-up display system.

Fig.1

Fig.2

Fig.3

Fig.4

EP 2 670 594 B1

Fig.5

24

Fig.6

Fig.7

EP 2 670 594 B1

**RÉFÉRENCES CITÉES DANS LA DESCRIPTION**

**Documents brevets cités dans la description**

- US 2003161997 A1
- US 3661686 A